# EUROPÄISCHE PATENTSCHRIFT

(11) **EP 2 614 106 B1**
(45) Veröffentlichungstag und Bekanntmachung des Hinweises auf die Patenterteilung: **05.04.2017**
(21) Anmeldenummer: 11801962.9
(22) Anmeldetag: 07.09.2011
(51) Int. Cl.: C08G 73/18

(54) **PBI-MODIFIZIERUNGS- UND VERNETZUNGSVERFAHREN**
PBI MODIFICATION AND CROSSLINKING METHOD
PROCÉDÉ DE MODIFICATION ET DE RÉTICULATION DE PBI

(30) Priorität: 07.09.2010 DE 102010044579
(43) Veröffentlichungstag der Anmeldung: 17.07.2013
(73) Patentinhaber: Whitefox Technologies Limited, London SW1A 2DD (GB)
(72) Erfinder: BLUM, Stephan, Rüdiger, Calgary AB T2N 3X4 (CA); KLEINE, Katharina, 33106 Paderborn (DE); BREMSER, Wolfgang, 33100 Dahl (DE)
(74) Vertreter: Potter Clarkson LLP
(86) Internationale Anmeldenummer: PCT/DE2011/001690
(87) Internationale Veröffentlichungsnummer: WO 2012/075977

(56) Entgegenhaltungen:
- WO-A2-02/070592
- US-A1- 2004 261 616
- US-B1- 6 362 313

## Beschreibung

Die Erfindung betrifft ein Verfahren der Modifizierung und der Vernetzung von Polybenzimidazol, PBI.

PBI-Fasern, ein Produkt der Weltraumforschung aus den 1980er Jahren, diente ursprünglich als Obermaterial von Feuerschutzbekleidung.

Aufgrund seiner außerordentlichen thermischen und chemischen Beständigkeit hat PBI als Membranmaterial heute auch Eingang in die Fertigung von Brennstoffzellen gefunden und wird insbesondere als Werkstoff für Hochtemperaturmembranen in Polymerelektrolytbrennstoffzellen, PEFC, genutzt. Dabei dient PBI vielfach als Matrix für protonenleitende Phosphorsäure, da das PBI zwar den hohen Temperaturen solcher Brennstoffzellen problemlos widersteht, jedoch selbst einen äußerst schlechten Protonenleiter darstellt und daher regelmäßig einer entsprechenden Dotierung bedarf.

Eine solche Dotierung hat den Vorteil, dass durch die Wahl geeigneter Dotierungsmittel Membrane für Brennstoffzellen sowohl für saure als auch für alkalische Brennstoffe hergestellt werden können, beispielsweise mit KOH als Dotierungsmittel bei alkalischen Brennstoffen.

Als nachteilig ist bei derartigen Dotierungen jedoch die Migration des Dotierungsmittels bei einem Betrieb der Brennstoffzelle anzusehen, durch die über die Lebensdauer der Brennstoffzelle hinweg die zunächst hohe Protonenleitfähigkeit dann doch deutlich zurückgeht.

Ein weiterer Nachteil ist die geringe mechanische Stabilität hochdotierter PBI-Membrane. Dem kann mit einer Vernetzung der Polymere begegnet werden, bspw. mit difunktionellen Halogenverbindungen gem. US 2004 0261616 A1 oder difunktionellen Epoxiden und Isocyanaten gem. DE 101 10 752 A1. Jedoch sind bei den dort erläuterten Verfahren die Vernetzungsreaktion und die Dotierung konkurrierende Verfahren, da beide an der Imidazolfunktionalität, insbesondere am Aminproton, ansetzen.

Vor diesem technischen Hintergrund macht die Erfindung es sich zur Aufgabe, ein modifiziertes PBI-Polymer zur Verfügung zu stellen, das einfach herzustellen und das insbesondere als Ausgangsmaterial für Membrane weitgehend frei funktionalisierbar und/oder vernetzbar ist.

Gelöst wird diese technische Problematik durch die Vorgehensweise gem. des Anspruchs 1, während die Unteransprüche vorteilhafte Weiterbildungen sowohl hinsichtlich der Funktionalität als auch der Vernetzung darstellen.

Ausgehend von einem PBI der Struktur 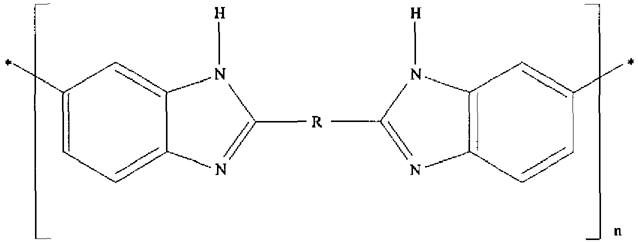 oder 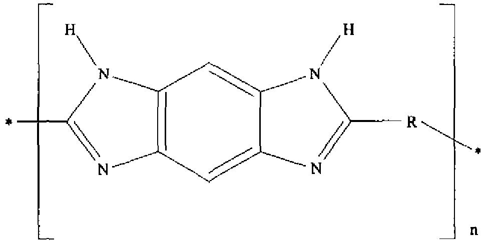 erfolgt in einer Lösung eine Reaktion dieser Polymere mit einer eine Halogen- und eine Doppelbindungsfunktionalität aufweisenden Verbindung der Art 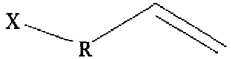 mit X einem Halogen und R einem organischen Rest, bspw. einem Alkylhalogenid, insbesondere 3-Brompropen, womit durch eine nukleophile Substitution des aminischen Protons der Benzimidazolfunktionalität die modifizierten Polymere 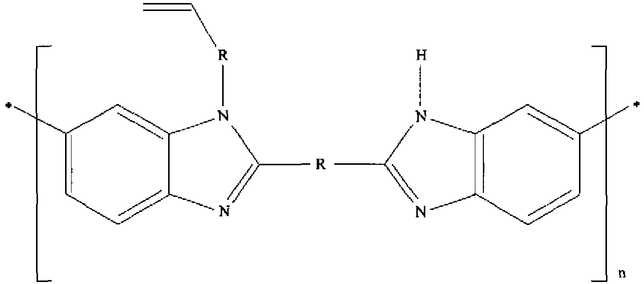 und 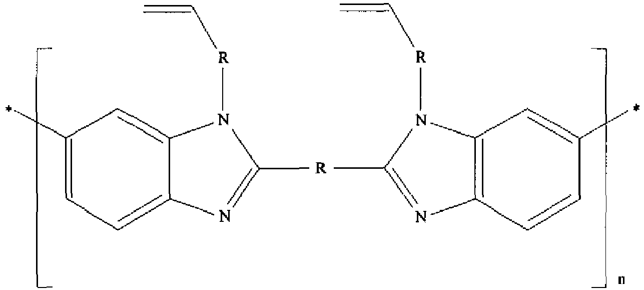 oder 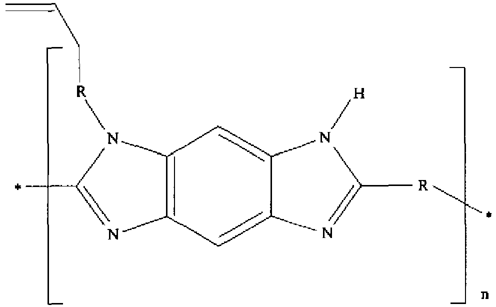 und 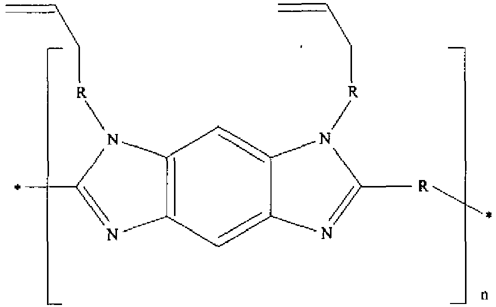 erhalten werden. Die nun vorliegenden freien Doppelbindungen stehen für eine Vernetzung oder Funktionalisierung der derart modifizierten Polymere in einfacher Weise zur Verfügung.

Die modifizierten Polymere können als Pulver oder Granulat ausgefällt mit einem ebenfalls pulverförmigen Vernetzer gemischt und zu einem späteren Zeitpunkt unter geeigneten Reaktionsbedingungen zu einem Formteil ausgeformt werde.

Wird aus der Lösung ein Formteil wie eine Membran oder ein Film hergestellt, können, mit oder ohne Initiator, die modifizierten, insbesondere allyl-funktionalisierten Polymere unmittelbar oder mittelbar miteinander vernetzt werden, womit ein nichtlösliches Formteil entsteht.

Die Vernetzung zwischen zwei modifizierten Polymeren kann mittelbar über ein wenigstens zwei Doppelbindungen aufweisendes Vernetzermolekül erfolgen. Hierzu ist ein Vernetzer nach erfolgter Reaktion des ursprünglichen PBI mit der eine Halogen- und eine Doppelbindungsfunktionalität aufweisenden Verbindung der die modifizierten Polymere dann aufweisenden Lösung beizugeben oder kann nach Herstellung eines Formteils dieses in eine Lösung mit einem das Formteil nicht lösenden Bestandteil und dem Vernetzer eingebracht werden und der Vernetzer in das Formteil diffundieren. Eine Vernetzung erfolgt dann anschließend wieder durch eine Wärmebehandlung.

Eine besonders stabile Vernetzung ist die unmittelbare zweier modifizierter Polymere über zwei Doppelbindungen, die nachstehend in der Erläuterung eines Ausführungsbeispiels weiter beschrieben ist.

Eine Polymerlösung mit Polybenzimidazol der Struktur 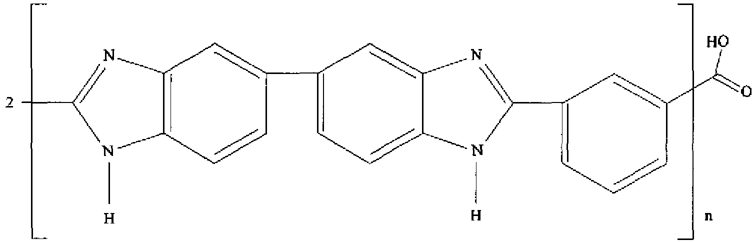 wird unter Zugabe von LiCl zu Verbesserung der Lösbarkeit und unter Zugabe eines Katalysators, vorzugsweise einem bicyclischen, tertiären Amin wie Triethylendiamin oder 1,4-Diazabicyclo[2.2.2]octan, TEDA oder DABCO in Dimethylacetamid, DMAc, als Lösungsmittel angesetzt.

Als eine Halogen- und eine Doppelbindungsfunktionalität aufweisenden Verbindung werden 4n 3-Brompropen (Allylbromid) beigegeben: 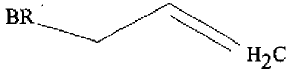 Nach einer Reaktionszeit von ca. 8 bis 24 Stunden können durch Erwärmung der Lösung auf etwa 40°C 4n HBr ausgetrieben werden und man erhält ein modifiziertes Polymer der Struktur 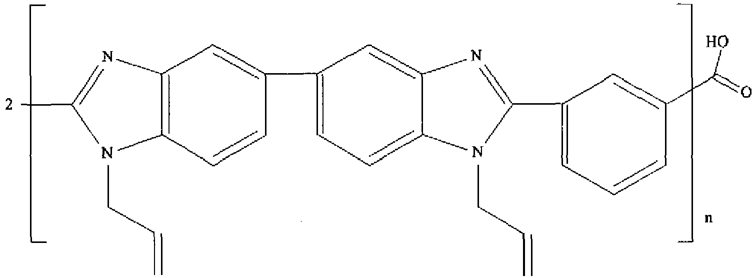 Aus der Lösung können Filme gezogen und das LiCl ausgewaschen werden.

In einem Ofen erfolgt unter Temperatureinfluß die anschließende Vernetzung zu 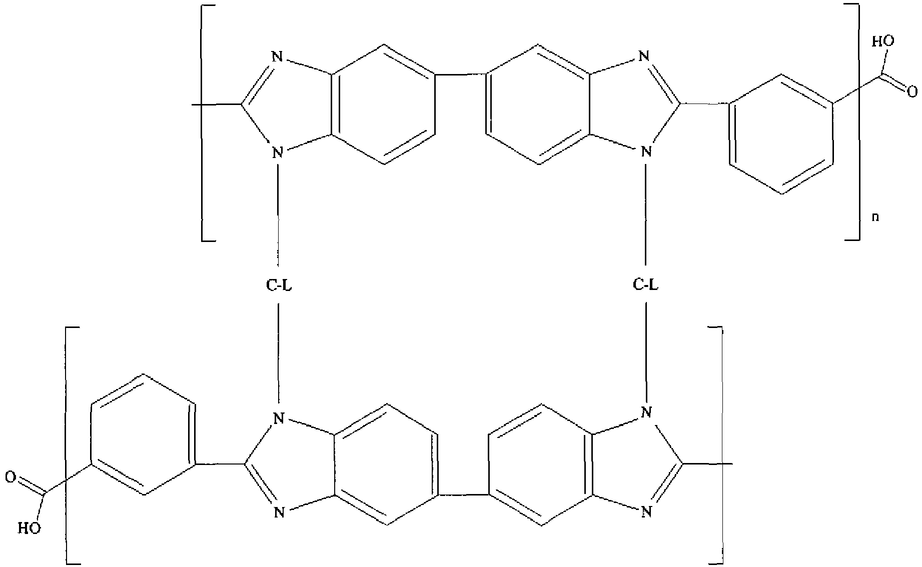 wobei C-L für cross-linking steht und eine der voranstehend erläuterten Bindungsfunktionen darstellen kann.

Eine thermogravimetrische Analyse zeigt Fig. 1. Darin bezeichnet 1 das Verhalten des ursprünglichen Polymers und 2 das Verhalten der voranstehend erläuterten, modifizierten und vernetzen Polymere.

Überraschenderweise ist die Versagenstemperatur der modifizierten vernetzen Polymere mit ca. 528°C kaum geringer als die der ursprünglichen Polymere mit ca. 536°C, jedoch war dies aufgrund der Anbindung einer aliphatischen Kette zu erwarten.

Dagegen zeigt die dynamisch-mechanische Analyse gem. Fig. 2, in der wiederum 1 das Verhalten des ursprünglichen Polymers und 2 das Verhalten der modifizierten vernetzen Polymere bezeichnet, einen deutlich höheren Elastizitätsmodul der modifizierten, vernetzten Polymere bei hohen Temperaturen, was für eine sehr gute Vernetzung steht.

Entsprechend einer Vernetzung kann vorgesehen sein, dass an eine Doppelbindung eines modifizierten Polymers eine wenigstens zwei Doppelbindungen aufweisende funktionelle Gruppe angeschlossen ist.

Dabei wird im Hinblick auf saure Membrane für Brennstoffzellen insbesondere daran gedacht sein, dass die funktionelle Gruppe eine hohe Protonenleitfähigkeit aufweist, wie bspw. Vinylphosphonsäure oder 1-Allyl-3-2methylimidazolium chlorid.

So erhält man ein saures PBI, wenn zu einer 3%igen wässrigen Lösung eines wie voranstehend erläuterten allyl-funktionalisierten PBI in DMAc eine zu den Allyl-Einheiten stöchiometrische Menge Vinylphosphonsäure und ein Initiator wie tert-Butyl-Perbenzoat zugegeben wird.

Die Reaktionslösung wird unter Stickstoff bei 140°C für 4 Stunden am Rückfluss erhitzt.

Auch kann die funktionelle Gruppe eine Amin-Gruppe sein, durch das insbesondere auch die schon alkalischen Eigenschaften des PBI weiter betont werden. Solches kann vorteilhaft bei der Herstellung von H₂/CO₂ selektiven, alkalischen, dann anionenleitenden Gasseparationsmembranen sein.

Für derartige Membranen kann es ferner zweckmäßig sein, dass die funktionelle Gruppe auf einer ionische Flüssigkeit basiert, bspw. eine an die Allylbindung angefügte Imidazolium basierte ionische Flüssigkeit. Bei bekannten, auf ionischen Flüssigkeiten basierenden Membranen ist bekannt, das Leistungsverluste durch Migration der ionischen Flüssigkeit entstehen können. Bei Verwendung von 1-allyl-methylimidazolium chlorid wir die ionische Flüssigkeit kovalent an das modifizierte Polymer angebunden und die Migration verhindert.

Eine weitere Möglichkeit besteht darin, dass die funktionelle Gruppe den Kristallisationsgrad des Polybenzimdazol herabsetzt, bspw. durch die Anbindung einer voluminösen Gruppe wie Allylbenzol oder Allyl-p-toluolsulfat.

Auch die Ausbildung von Copolymeren ist unproblematisch, wenn an die Doppelbindung eines modifizierten Polymers ein eine Doppelbindung aufweisendes Monomer angeschlossen wird, was beispielsweise mittels einer radikalischen Polymerisation erfolgen kann.

Als Beispiel für eine Funktionalisierung und Vernetzung der modifizierten Polymere sei ferner auf die Möglichkeit verwiesen, einen Film oder eine Membran aus einem allyl-funktionalisierten PBI herzustellen und diese dann in einer geeigneten Lösung zu tränken, bspw. Vinylphosphonsäure, gegebenenfalls unter Zugabe eines Vernetzers, um dann in einem Ofen eine Reaktion zwischen der Allylfunktion und der Vinylphosphonsäure hervorzurufen und die Vernetzung durchzuführen.

Ein weiteres Beispiel für eine Funktionalisierung und Vernetzung der modifizierten Polymere ist die Beigabe von Triallylisocyanurat, Handelsname TAIC, bekannt als Coaktivator für die Peroxidvernetzung, dessen drei Doppelbindungen vielfältige Vernetzungsmöglichkeiten ermöglichen. Darüber hinaus kann Triallylisocyanurat als poly-funktionales allylisches Monomer selbst polymerisieren oder eine Anbindung einer funktionellen Gruppe an einer der Doppelbindungen erfahren.

## Patentansprüche

1. Verfahren zur Modifizierung und Vernetzung von Polybenzimidazol (PBI) der Struktur 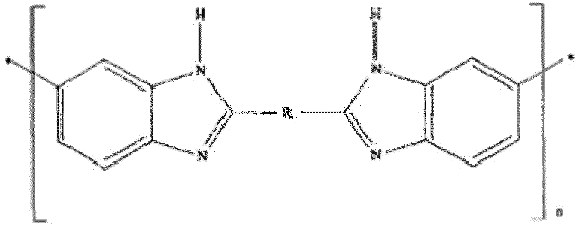 oder 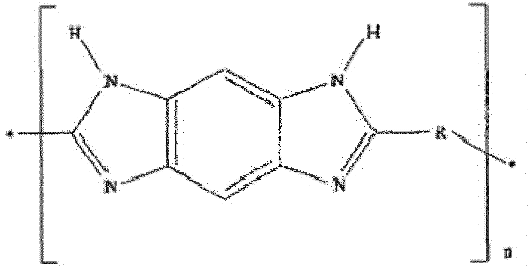 **dadurch gekennzeichnet, dass** das Polybenzimidazol in einer Lösung mit einer eine Halogen- und eine Doppelbindungsfunktionalität aufweisenden Verbindung der Art 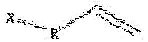 worin X für ein Halogen und R für einen organischen Rest stehen, durch eine nukleophile Substitution des aminischen Protons der Benzimidazolfunktionalität zu den modifizierten Polymeren 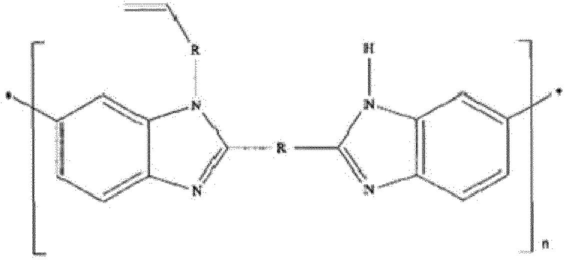 und 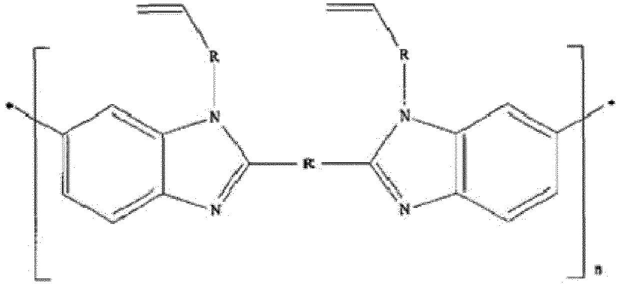 oder 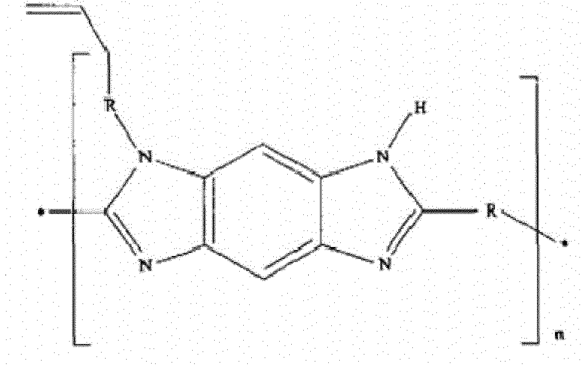 und 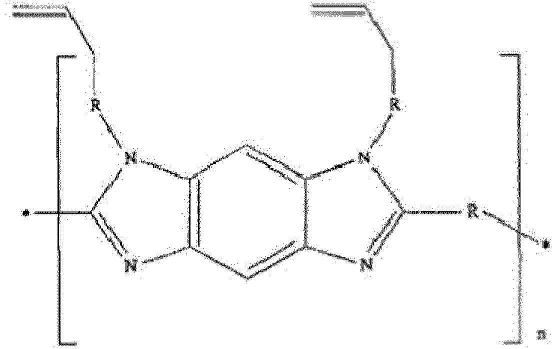 reagiert, wobei über die so entstandenen freien Doppelbindungen jeweils eine funktionelle Gruppe angeschlossen wird und/oder eine Vernetzung der derart modifizierten Polymere erfolgt.

2. Verfahren nach Anspruch 1, **dadurch gekennzeichnet, dass** die Vernetzung zwischen zwei modifizierten Polymeren beispielsweise mittels eines wenigstens zwei Doppelbindungen aufweisenden Vernetzermoleküls erfolgt.

3. Verfahren nach einem oder mehreren der vorangehenden Ansprüche, **gekennzeichnet durch** die Vernetzung zweier modifizierter Polymere über zwei Doppelbindungen.

4. Verfahren nach Anspruch 1, **dadurch gekennzeichnet, dass** an eine Doppelbindung eines modifizierten Polymers wenigstens eine eine Doppelbindung aufweisende funktionelle Gruppe angeschlossen wird, wobei vorzugsweise die funktionelle Gruppe eine hohe Protonenleitfähigkeit aufweist.

5. Verfahren nach Anspruch 4, **dadurch gekennzeichnet , dass** die funktionelle Gruppe eine Amingruppe ist.

6. Verfahren nach Anspruch 4, **dadurch gekennzeichnet, dass** die funktionelle Gruppe auf einer ionischen Flüssigkeit basiert.

7. Verfahren nach Anspruch 4, **dadurch gekennzeichnet, dass** die funktionelle Gruppe den Kristallisationsgrad des Polybenzimidazols herabsetzt.

8. Verfahren nach Anspruch 1, **dadurch gekennzeichnet, dass** an die Doppelbindung eines modifizierten Polymers ein eine Doppelbindung aufweisendes Monomer angeschlossen wird.

9. Modifiziertes Polybenzimidazolpolymer, das wiederkehrende Einheiten der folgenden Formel umfasst: 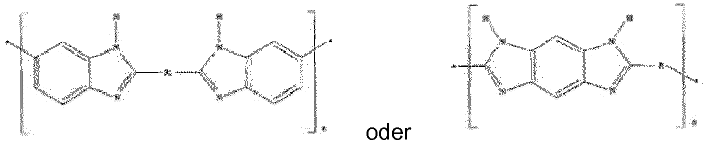 wobei mindestens eines der Stickstoffatome der wiederkehrenden Einheiten kovalent an eine Verbindung der Formel 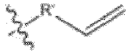 worin R' für einen organischen Rest steht, gebunden ist.

10. Modifiziertes Polybenzimidazolpolymer nach Anspruch 9, wobei R' für Alkyl, beispielsweise -CH₂-, steht.

11. Modifiziertes Polybenzimidazolpolymer nach Anspruch 9, das die folgende Strukur aufweist: 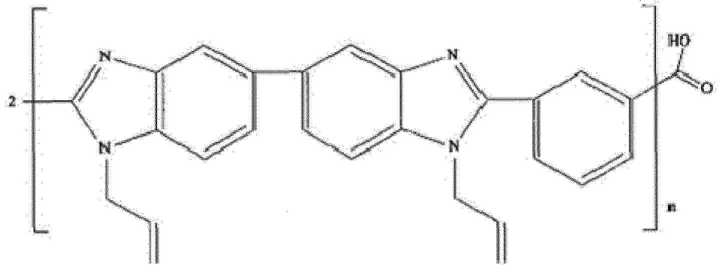 oder

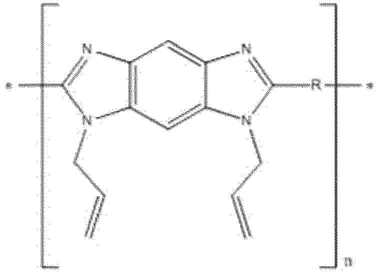

12. Vernetztes Polybenzimidazolpolymer, hergestellt aus dem modifizierten Polybenzimidazolpolymer nach einem der Ansprüche 9 bis 11.

13. Vernetztes Polybenzimidazolpolymer der folgenden Struktur 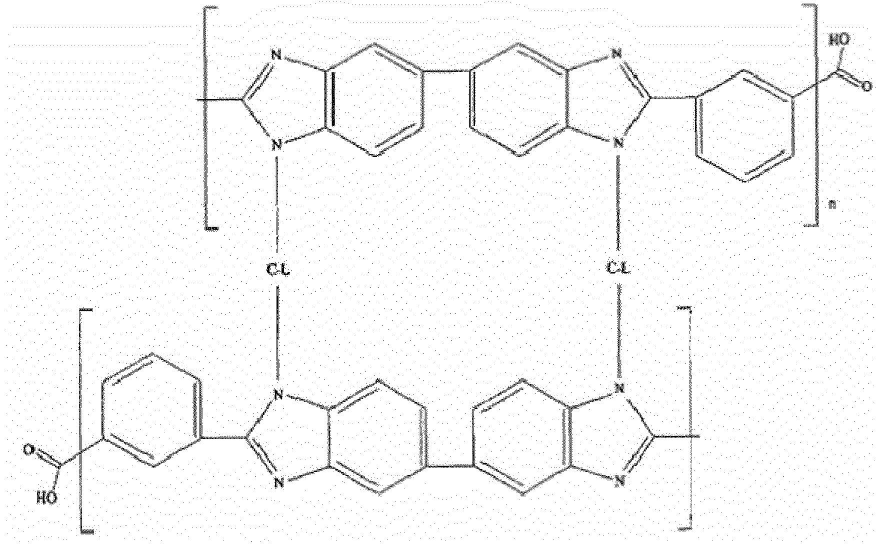 wobei C-L einen Vernetzer umfasst, der durch Kuppeln einer beliebigen oder zwei von einer Allylgruppe, Vinylphosphonsäure, 1-Allyl-3-methylimidazoliumchlorid, einer Amingruppe, Allylbenzol, Allyl-p-toluolsulfat und Triallylisocyanurat gebildet wird.

14. Vernetztes Polybenzimidazolpolymer nach Anspruch 13, wobei der Vernetzer Triallylisocyanurat umfasst und/oder wobei das Polymer eine Versagenstemperatur von etwa 528 °C aufweist.

15. Saure Membran zur Verwendung in einer Brennstoffzelle, die ein vernetztes Polybenzimidazolpolymer nach Anspruch 13 der folgenden Formel umfasst: 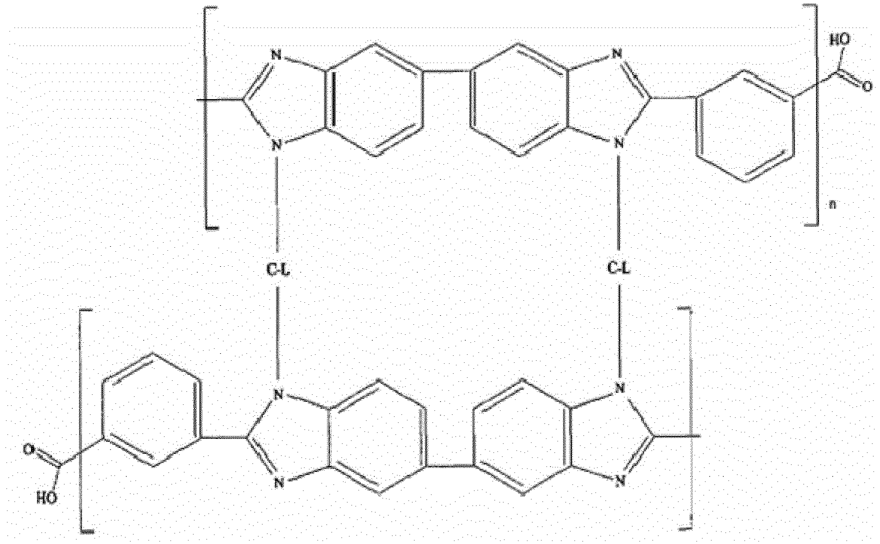 wobei C-L für einen Vernetzer steht und wobei das Polymer ferner eine funktionelle Gruppe umfasst, die aus der Gruppe ausgewählt ist, die aus einer Vinylphosphonsäure und 1-Allyl-3-methylimidazoliumchlorid besteht.

16. Alkalische Membran, die ein vernetztes Polybenzimidazolpolymer nach Anspruch 13 der folgenden Formel umfasst: 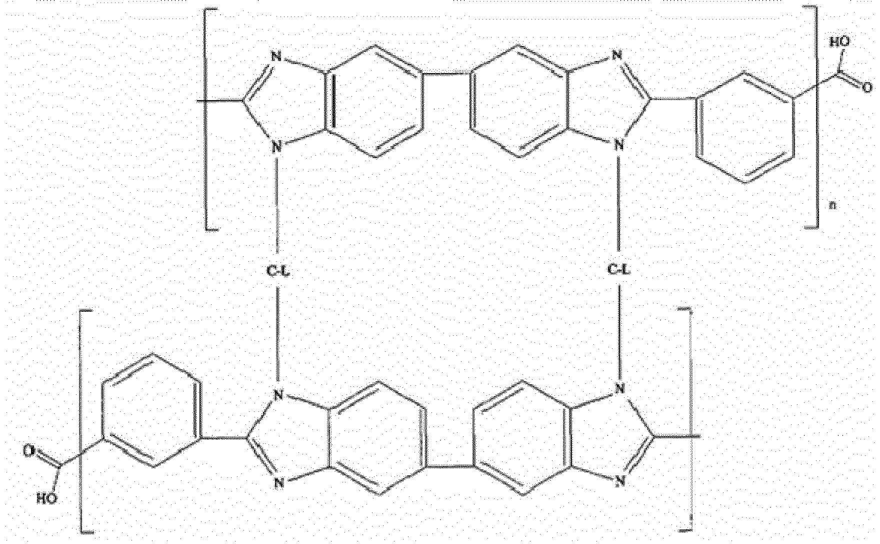 wobei C-L für einen Vernetzer steht und wobei das Polymer ferner eine funktionelle Amingruppe umfasst.

17. Alkalische Membran nach Anspruch 16, wobei die Membran eine H₂/CO₂-selektive Membran ist und wobei vorzugsweise die Membran Anionen leitet.

18. Vernetztes Polybenzimidazolpolymer nach einem der Ansprüche 12 bis 14 oder Membran nach einem der Ansprüche 15 bis 17, wobei der Vernetzer eine oder mehrere Allylgruppen umfasst.

## Claims

1. Method for modifying and cross-linking polybenzimidazole (PBI) of the structure 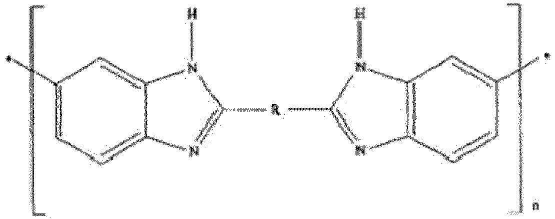 or 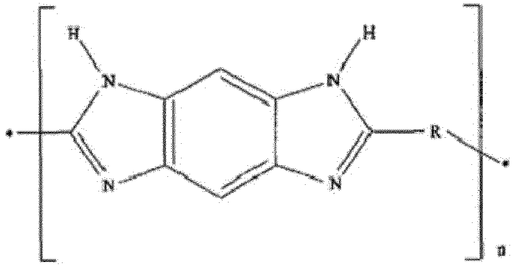 **characterised in that** the polybenzimidazole reacts, in a solution, with a compound of the type 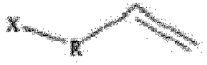 having a halogen functionality and a double bond functionality, where X represents a halogen and R represents an organic group, by nucleophilic substitution of the aminic proton of the benzimidazole functionality so as to form the modified polymers 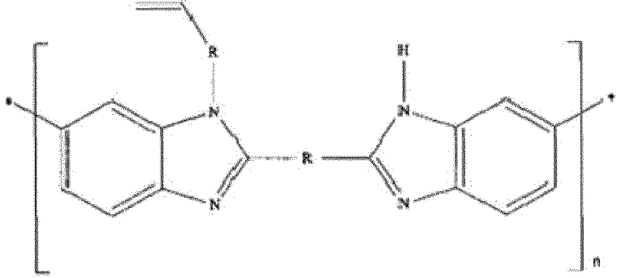 and 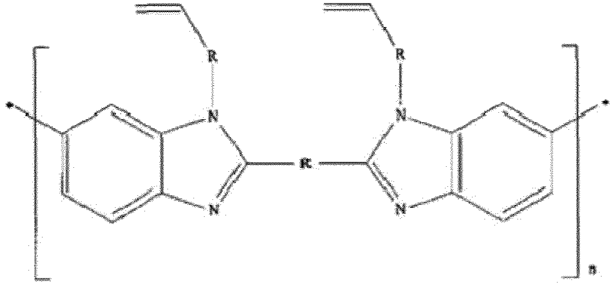 or 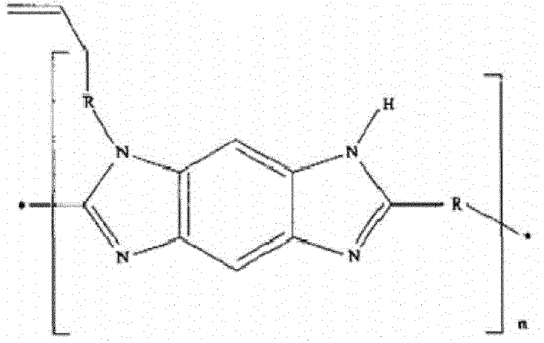 and 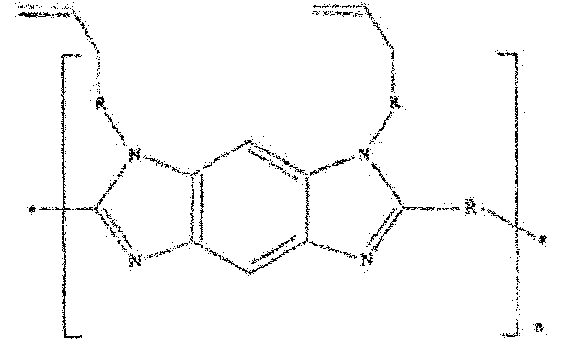 a functional group being attached and/or the polymers thus modified becoming cross-linked by means of each of the free double bonds that are thus formed.

2. Method according to claim 1, **characterised in that** the cross-linking between two modified polymers takes place, for example, by means of a cross-linking molecule having at least two double bonds.

3. Method according to one or more of the preceding claims, **characterised by** the cross-linking of two modified polymers by means of two double bonds.

4. Method according to claim 1, **characterised in that** at least one functional group having a double bond is attached to a double bond of a modified polymer, the functional group preferably having a high proton conductivity.

5. Method according to claim 4, **characterised in that** the functional group is an amine group.

6. Method according to claim 4, **characterised in that** the functional group is based on an ionic liquid.

7. Method according to claim 4, **characterised in that** the functional group reduces the degree of crystallinity of the polybenzimidazole.

8. Method according to claim 1, **characterised in that** a monomer having a double bond is attached to the double bond of a modified polymer.

9. Modified polybenzimidazole polymer that comprises repeating units of the following formula: 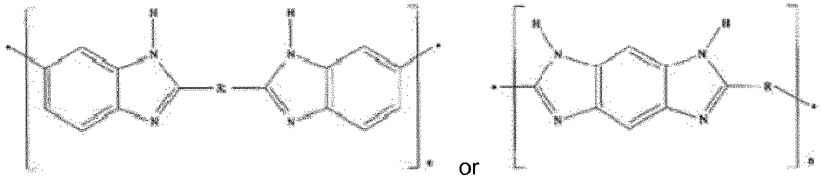 wherein at least one of the nitrogen atoms of the repeating units is covalently bonded to a compound of formula 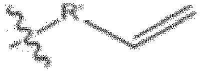 where R' represents an organic group.

10. Modified polybenzimidazole polymer according to claim 9, wherein R' represents an alkyl, for example -CH₂-.

11. Modified polybenzimidazole polymer according to claim 9 that has the following structure: 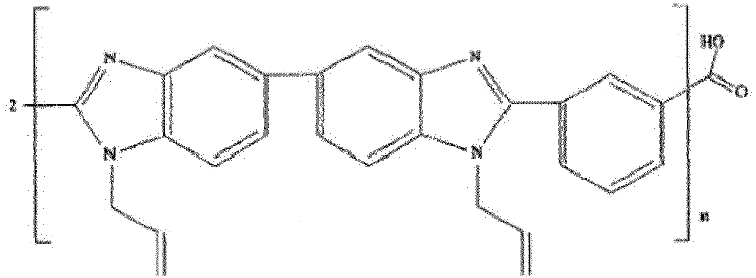 or

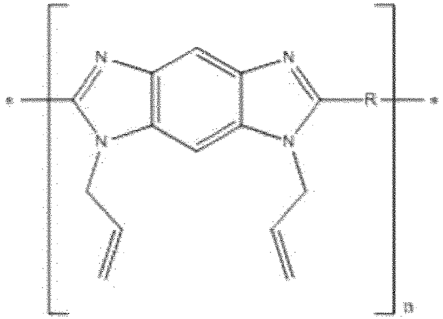

12. Cross-linked polybenzimidazole polymer that is produced from the modified polybenzimidazole polymer according to any of claims 9 to 11.

13. Cross-linked polybenzimidazole polymer of the following structure 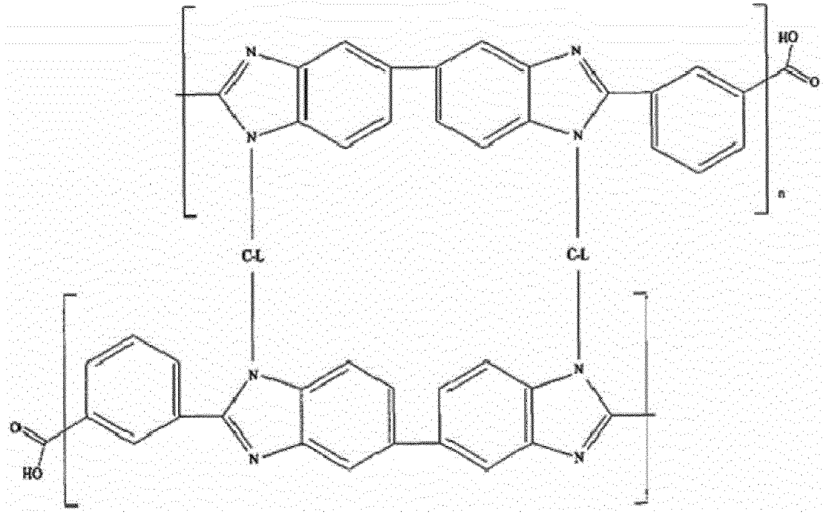 wherein C-L comprises a cross-linking agent that is formed by coupling any one or two of an allyl group, vinylphosphonic acid, 1-allyl-3-methylimidazolium chloride, an amine group, allylbenzene, allyl-p-toluenesulfate and triallyl isocyanurate.

14. Cross-linked polybenzimidazole polymer according to claim 13, wherein the cross-linking agent comprises triallyl isocyanurate and/or wherein the polymer has a failure temperature of approximately 528 °C.

15. Acidic membrane for use in a fuel cell, which comprises a cross-linked polybenzimidazole polymer according to claim 13 of the following formula: 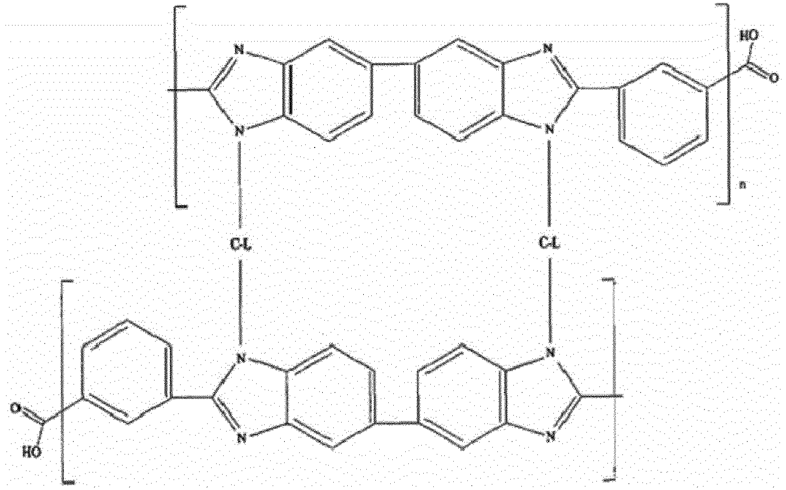 wherein C-L represents a cross-linking agent and wherein the polymer further comprises a functional group that is selected from the group consisting of vinylphosphonic acid and 1-allyl-3-methylimidazolium chloride.

16. Alkaline membrane that comprises a cross-linked polybenzimidazole polymer according to claim 13 of the following formula: 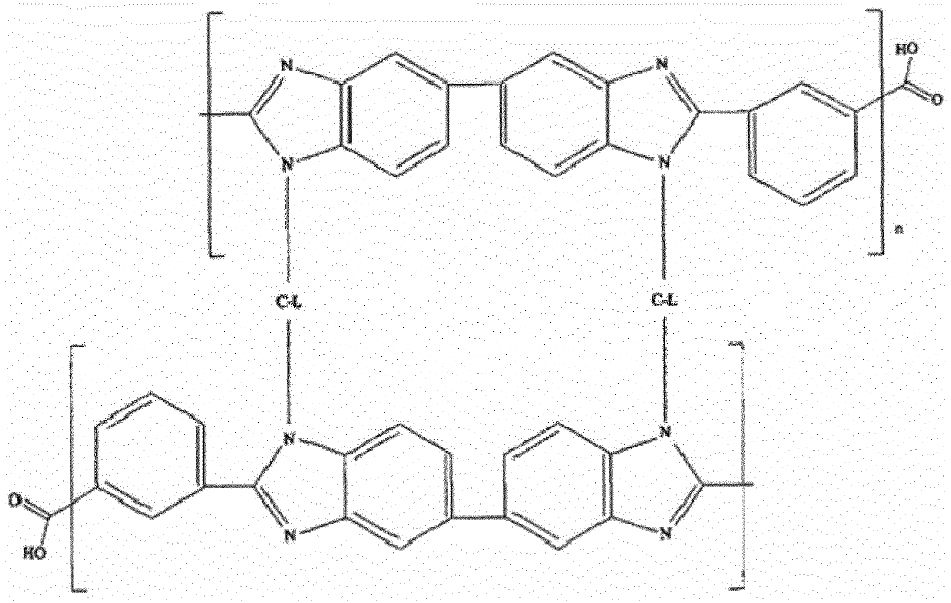 wherein C-L represents a cross-linking agent and wherein the polymer further comprises a functional amine group.

17. Alkaline membrane according to claim 16, wherein the membrane is a H₂/CO₂-selective membrane and wherein the membrane preferably conducts anions.

18. Cross-linked polybenzimidazole polymer according to any of claims 12 to 14 or membrane according to any of claims 15 to 17, wherein the cross-linking agent comprises one or more allyl groups.

## Revendications

1. Procédé destiné à la modification et à la réticulation du polybenzimidazole (PBl) de structure suivante : 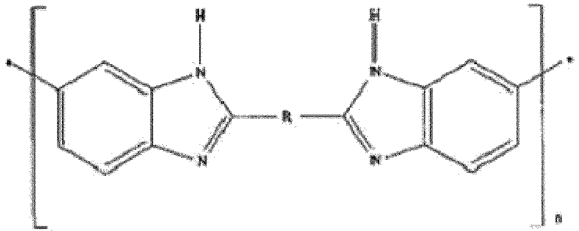 ou 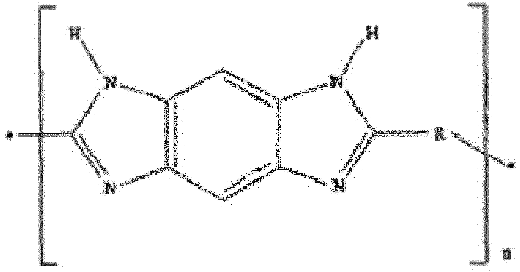 **caractérisé en ce que** le polybenzimidazole est mis en réaction dans une solution avec un composé présentant une fonctionnalité halogène et une fonctionnalité à double liaison du type suivant : 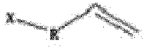 où X correspond à un halogène et où R correspond à un résidu organique, par une substitution nucléophile du proton aminé de la fonctionnalité du benzimidazole pour donner lieu aux polymères modifiés de type : 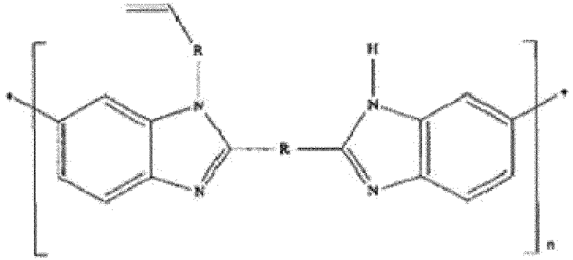 et 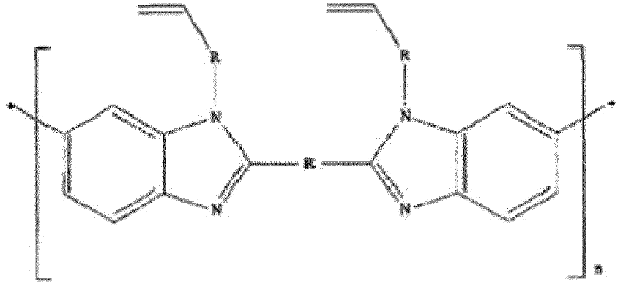 ou 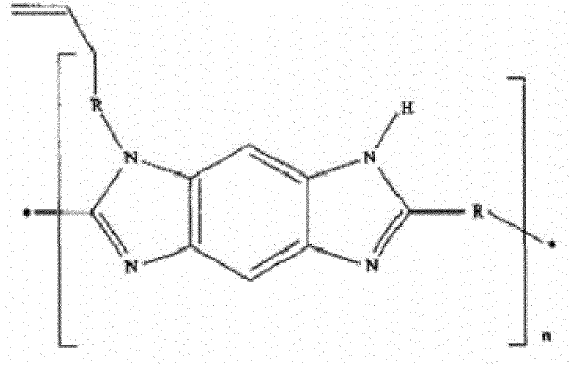 et 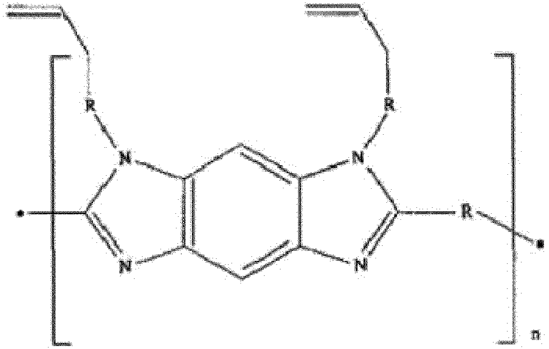 dans lequel, par l'intermédiaire des doubles liaisons libres obtenues de la sorte, un groupe fonctionnel est relié et / ou une réticulation des polymères ainsi modifiés a lieu, respectivement.

2. Procédé selon la revendication 1, **caractérisé en ce que** la réticulation entre deux polymères modifiés a lieu, par exemple, au moyen d'une molécule d'un agent de réticulation présentant au moins deux doubles liaisons.

3. Procédé selon l'une ou plusieurs des revendications précédentes, **caractérisé par** la réticulation de deux polymères modifiés par l'intermédiaire de deux doubles liaisons.

4. Procédé selon la revendication 1, **caractérisé en ce que** tout au moins un groupe fonctionnel présentant une double liaison est relié à une double liaison d'un polymère modifié, dans lequel le groupe fonctionnel présente, de préférence, une conductivité protonique élevée.

5. Procédé selon la revendication 4, **caractérisé en ce que** le groupe fonctionnel est un groupe amine.

6. Procédé selon la revendication 4, **caractérisé en ce que** le groupe fonctionnel est basé sur un liquide ionique.

7. Procédé selon la revendication 4, **caractérisé en ce que** le groupe fonctionnel fait baisser le degré de cristallisation du polybenzimidazole.

8. Procédé selon la revendication 1, **caractérisé en ce qu'**un monomère présentant une double liaison est relié à la double liaison d'un polymère modifié.

9. Polymère de polybenzimidazole modifié, lequel comprend des motifs récurrents de formule suivante : 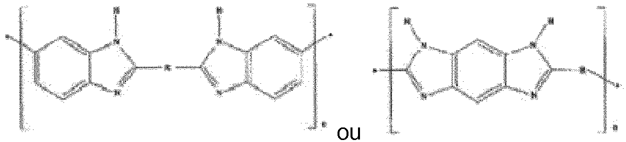 dans lequel au moins l'un des atomes d'azote des motifs récurrents est lié de manière covalente à un composé de formule : 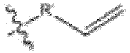 où R' correspond à un résidu organique.

10. Polymère de polybenzimidazole modifié selon la revendication 9, dans lequel R' correspond à un alkyle, par exemple-CH₂-.

11. Polymère de polybenzimidazole modifié selon la revendication 9, lequel présente la structure suivante : 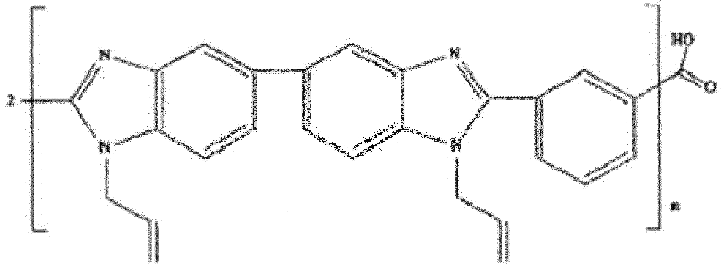 ou

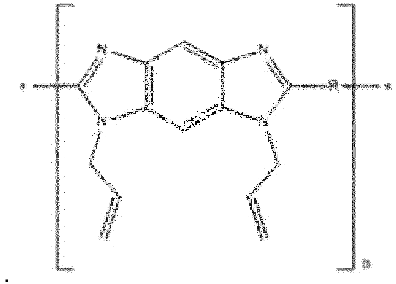

12. Polymère de polybenzimidazole réticulé, fabriqué à partir du polymère de polybenzimidazole modifié selon l'une des revendications 9 à 11.

13. Polymère de polybenzimidazole réticulé de structure suivante : 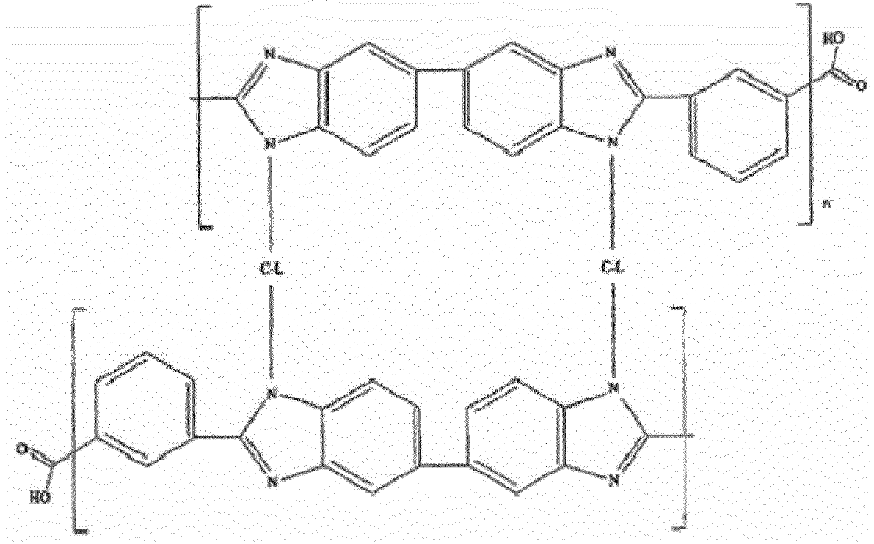 dans lequel C-L comprend un agent de réticulation, lequel est formé par le couplage d'un quelconque ou de deux des éléments suivants : un groupe allyle, un acide vinylphosphonique, un chlorure de 1-allyl-3-méthylimidazolium, un groupe amine, un allylbenzène, un p-toluène sulfate d'allyle et un isocyanurate de triallyle.

14. Polymère de polybenzimidazole réticulé selon la revendication 13, dans lequel l'agent de réticulation comprend un isocyanurate de triallyle et / ou dans lequel le polymère présente une température d'effondrement d'environ 528 °C.

15. Membrane d'acide destinée à une utilisation dans une pile à combustible, laquelle comprend un polymère de polybenzimidazole réticulé selon la revendication 13 de formule suivante : 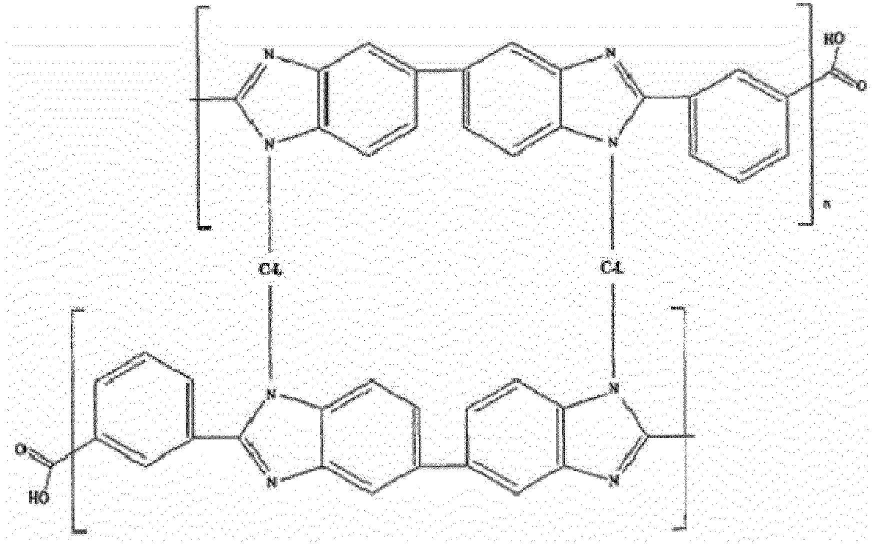 dans laquelle C-L correspond à un agent de réticulation et dans lequel le polymère comprend en outre un groupe fonctionnel, lequel est sélectionné parmi le groupe qui est composé d'un acide vinylphosphonique et d'un chlorure de 1-allyl-3-méthylimidazolium.

16. Membrane alcaline, laquelle comprend un polymère de polybenzimidazole réticulé selon la revendication 13 de formule suivante : 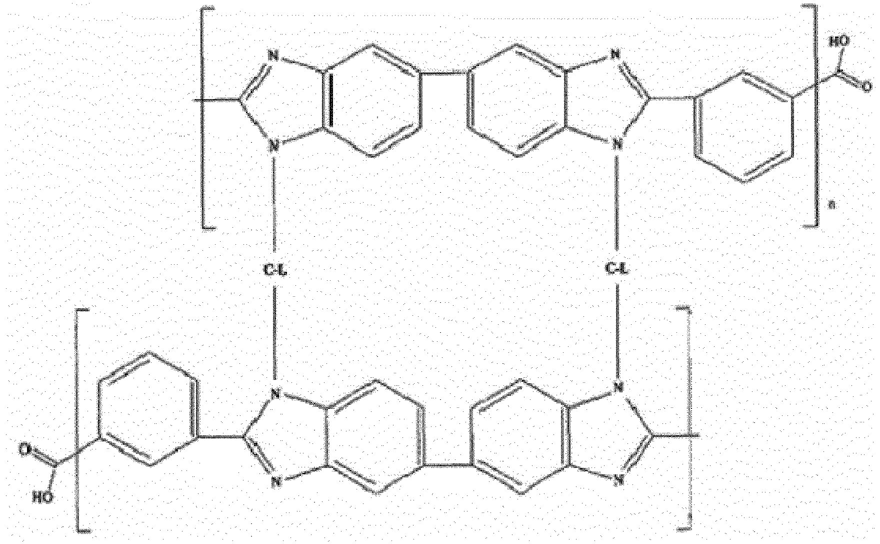 dans laquelle C-L correspond à un agent de réticulation et dans laquelle le polymère comprend en outre un groupe fonctionnel amine.

17. Membrane alcaline selon la revendication 16, dans laquelle la membrane est une membrane sélective de H₂/CO₂ et dans laquelle la membrane conduit, de préférence, des anions.

18. Polymère de polybenzimidazole réticulé selon l'une des revendications 12 à 14 ou membrane selon l'une des revendications 15 à 17, dans lequel ou laquelle l'agent de réticulation comprend un ou plusieurs groupes allyle.
